# FASCICULE DE BREVET EUROPEEN

(11) **EP 3 296 135 B1**
(45) Date de publication et mention de la délivrance du brevet: **12.06.2019**
(21) Numéro de dépôt: 17187288.0
(22) Date de dépôt: 22.08.2017
(51) Int. Cl.: B60K 11/08, B60R 21/34, B60R 19/18

(54) **OBTURATEUR FUSIBLE DE PARE-CHOCS AVANT**
SICHERUNGSVERSCHLUSS EINES VORDEREN STOSSDÄMPFERS
FUSIBLE SHUTTER OF A FRONT BUMPER

(30) Priorité: 16.09.2016 FR 1658685
(43) Date de publication de la demande: 21.03.2018
(73) Titulaire: PSA Automobiles SA, 78300 Poissy (FR)
(72) Inventeur: BESSETTE, Damien, 25150 Ecot (FR); GIGANDET, Nathalie, 25310 Thulay (FR); BEAUDOIN, Olivier, 25490 Dampierre Les Bois (FR)
(74) Mandataire: Fernandez, Francis Lionel

(56) Documents cités:
- EP-A2- 1 241 080
- EP-A2- 2 295 296
- WO-A1-2016/016549
- FR-A1- 2 982 814

## Description

L'invention a trait au domaine des véhicules, notamment automobiles. Elle concerne, plus précisément, l'absorption de l'énergie d'un choc piéton sur un pare-chocs avant de véhicule.

Le pare-chocs avant d'un véhicule automobile comprend deux parties distinctes :
- une peau extérieure, généralement en matériau thermoplastique, dont le but est d'amortir les chocs de faible intensité, cette peau extérieure se déformant et reprenant sa forme initiale en cas de chocs de faible intensité,
- un ou plusieurs éléments de structure, internes au pare-chocs avant et rattachés à la structure d'un véhicule automobile, ces éléments de structure ayant pour but d'amortir un impact, en absorbant l'énergie d'un choc.

Les chocs piétons sur un pare-chocs avant de véhicule peuvent entraîner des blessures, telles que des fractures de la jambe, du genou et des lésions ligamentaires. Ces blessures sont rarement mortelles, mais peuvent être associées à une infirmité permanente.

Pour estimer le risque de blessures à la jambe lors d'un choc entre un véhicule et un adulte, une série de tests d'impact peut être réalisée à 40 km/h, à l'aide d'un élément de frappe ayant la forme de la jambe d'un adulte. Les zones d'impact sont ensuite évaluées, et la protection offerte est jugée bonne, adéquate, marginale, faible ou insuffisante.

Le document EP1 241 080 décrit une partie avant de véhicule comprenant des éléments de structure inférieur et supérieur, un obturateur comportant un panneau, monté entre un radiateur et une peau extérieure. Le document FR 2926273 décrit un dispositif destiné à être monté à l'avant d'un véhicule automobile, entre un radiateur et une peau de pare-chocs avant munie d'une entrée d'air, le dispositif comprenant :
- des moyens de fixation d'au moins un volet mobile d'obturation de l'entrée d'air,
- au moins une portée d'appui contre une pièce de structure du véhicule,
- et au moins une portée d'appui contre la peau,
le dispositif étant agencé pour absorber une partie significative de l'énergie d'un choc en se déformant et/ou en se brisant, lors d'un choc d'une tête, d'une hanche ou d'un genou d'un piéton contre le pare-chocs avant.

Un tel dispositif permet d'améliorer la protection d'un piéton en cas de choc avec un véhicule automobile. Néanmoins, les portées d'appuis s'étendent depuis un cadre comprenant le volet mobile d'obturation de l'entrée d'air, et le dispositif nécessite ainsi un certain volume dédié entre le pare-chocs avant et le radiateur, pour sa mise en place et son maintien en position.

Un premier objectif est de proposer un dispositif permettant de boucher une entrée d'air pratiquée dans un pare-chocs avant, ce dispositif améliorant la protection d'un piéton en cas de choc avec un véhicule.

Un deuxième objectif est de proposer un tel dispositif qui soit compact.

A cet effet, il est proposé, en premier lieu, une partie avant de véhicule, notamment automobile, munie d'un pare-chocs avant comportant :
- une peau extérieure comprenant une ouverture,
- un radiateur,
- un élément de structure supérieur,
- un élément de structure inférieur,
- un obturateur monté entre le radiateur et la peau extérieure, l'obturateur étant monté avec l'élément de structure supérieur et l'élément de structure inférieur, l'obturateur étant apte à bloquer en partie l'ouverture,
l'obturateur comprenant une patte supérieure et une patte inférieure s'étendant respectivement depuis le panneau jusqu'aux éléments de structure, de sorte à définir un espace, la patte supérieure comprenant à ses extrémités deux points de rupture.

Avantageusement, un tel obturateur permet de canaliser efficacement un flux d'air pour refroidir un radiateur disposé derrière cet obturateur, et décalé de sorte à être aligné avec le flux d'air canalisé.

De plus, un tel obturateur permet de garantir une bonne absorption d'une partie de l'énergie d'un choc piéton contre le pare-chocs d'un véhicule automobile.

Diverses caractéristiques supplémentaires peuvent être prévues, seules ou en combinaison :
- la patte inférieure comprend à ses extrémités deux points de rupture ;
- l'obturateur comprend une languette s'étendant depuis la patte inférieure et étant apte à s'insérer dans l'élément de structure inférieur, la languette présentant une forme de came ;
- l'obturateur comprend un plat s'étendant depuis la patte supérieure, le plat étant percé d'un trou apte à recevoir un rivet, de sorte à maintenir en place l'obturateur avec la poutre supérieure ;

Il également proposé un véhicule, notamment automobile, comprenant une partie avant telle que présentée ci-dessus.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un véhicule automobile (en traits pointillés) comprenant un pare-chocs avant (en traits gras continus) ;
- la figure 2 est une vue en perspective éclatée du pare-chocs avant de la figure 1 muni d'un obturateur ;
- la figure 3 est une vue en perspective de l'obturateur de la figure 2 ;
- la figure 4 est une vue en perspective du pare-chocs avant de la figure 1 muni de l'obturateur de la figure 2 ;
- la figure 5 est une vue en coupe du pare-chocs avant de la figure 1 muni de l'obturateur de la figure 2.

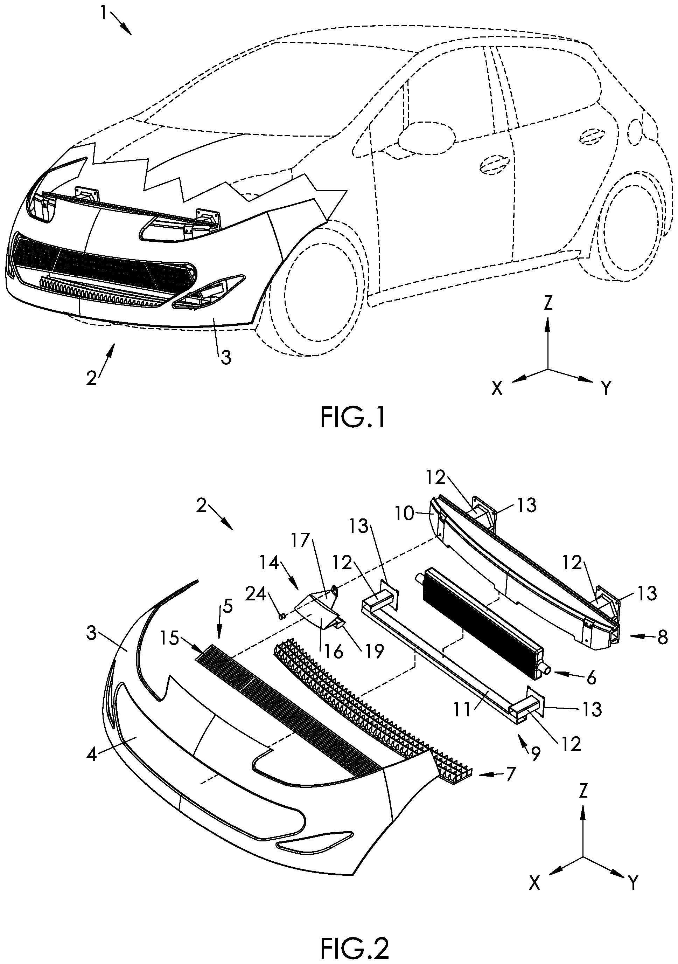

Sur la figure 1 est représenté un véhicule **1**, notamment automobile, (en traits pointillés) comprenant un pare-chocs **2** avant (en traits gras continus) permettant de protéger le véhicule **1** d'éventuelles collisions avec un élément extérieur au véhicule **1**.

Le véhicule **1** peut par exemple être un véhicule particulier ou un véhicule utilitaire.

On définit par rapport au véhicule **1** un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal.

Dans la suite de la description et en référence au repère défini ci-dessus, les termes « longitudinal » ou « longitudinalement » font référence à une direction confondue avec l'axe X, les termes « transversal » ou « transversalement » font référence à une direction confondue avec l'axe Y, et les termes « vertical » ou « verticalement » font référence à une direction confondue avec l'axe Z.

Tel qu'illustré sur la figure 2, le pare-chocs **2** avant comprend une peau **3** extérieure. Généralement en thermoplastique, la peau **3** extérieure arbore la forme de la carrosserie du véhicule **1** et dispose avantageusement du même coloris que la carrosserie.

Le rôle de la peau **3** extérieure est d'assurer une sécurité des occupants du véhicule **1** automobile et d'un piéton potentiellement renversé lors qu'une collision, en amortissant un choc par l'avant du véhicule **1** automobile. La peau **3** extérieure se déforme facilement et absorbe une partie de l'énergie engendrée lors d'un choc piéton. La peau 3 extérieure peut se briser en cas de choc violent.

La peau **3** extérieure comprend une ouverture **4**, permettant à l'air de passer au travers de la peau **3** extérieure pour refroidir les organes mécaniques se situant derrière la peau **3** extérieure, le déplacement du véhicule **1** automobile permettant le passage d'air par l'ouverture **4**.

Le pare-chocs **2** avant comprend une grille **5**, située derrière l'ouverture **4**, et permettant de protéger les organes mécaniques situés derrière la grille **5** d'un impact avec un corps étranger. La grille **5** comprend une pluralité de lamelles qui peuvent être droites et/ou croisées, de sorte à former un maillage. Ces lamelles autorisent le passage de l'air, tout en permettant le blocage d'éléments physiques ne pouvant pas passer au travers du maillage.

Le véhicule **1** comprend un radiateur **6** d'air de suralimentation, localisé derrière la grille **5** de sorte à être refroidi par l'air entrant par l'ouverture **4**. Le radiateur **6** d'air de suralimentation est un dispositif permettant d'améliorer le rendement d'un moteur équipé d'un turbocompresseur. Le turbocompresseur augmente la puissance du moteur mais aussi la température de l'air d'admission. Le radiateur **6** d'air de suralimentation a pour rôle de refroidir cet air d'admission et d'accroître sa densité, avant qu'il ne parvienne jusqu'à la chambre de combustion du moteur. Le radiateur **6** d'air de suralimentation élimine ainsi les effets néfastes du turbocompresseur, à savoir, la surconsommation, les chocs thermiques.

Le pare-chocs **2** avant comprend un déflecteur **7** d'air, localisé sous le radiateur **6** d'air de suralimentation. Le déflecteur **7** d'air s'étend transversalement sur toute la longueur du pare-chocs **2** avant. Le déflecteur **7** d'air est une pièce généralement en matériau polymère comprenant une pluralité de lamelles disposées de sorte à canaliser l'air entrant par l'ouverture **4**, dans le but de diriger le flux d'air en direction du radiateur **6** d'air de suralimentation. Ce flux d'air canalisé par le déflecteur **7** d'air participe au refroidissement du radiateur **6** d'air de suralimentation.

Le pare-chocs **2** avant comprend deux éléments **8**, **9** de structure, un élément **8** de structure supérieur et un élément **9** de structure inférieur, les éléments **8, 9** de structure sont respectivement situés au-dessus et en dessous du radiateur **6** d'air de suralimentation, et un peu plus en avant de celui-ci.

Les éléments **8**, **9** de structure comprennent respectivement une poutre **10** supérieure et une poutre **11** inférieure s'étendant transversalement sur une partie de la longueur du pare-chocs **2** avant, ces poutres **10**, **11** étant bordées de deux pieds **12** s'étendant longitudinalement. Au bout de chaque pied **12** se trouve une platine **13**. Ces platines **13** permettent de solidariser les éléments **8**, **9** de structure à la structure du véhicule **1** automobile, plus particulièrement à la caisse de celui-ci.

Les éléments **8**, **9** de structure fonctionnent de la façon suivante. Lorsqu'un choc a lieu entre un piéton et la peau **3** extérieure du pare-chocs **2** avant, la ou les jambes du piéton s'enfoncent dans le pare-chocs **2** avant, la peau **3** extérieure, facilement déformable, va se plier vers l'intérieur du véhicule **1** automobile, la grille **5** va se briser, la peau **3** extérieure en se déformant va venir en appui des éléments **8**, **9** de structure, au niveau de leur poutre **10**, **11**. Le cas échéant, les pieds **12** se déforment et s'écrasent longitudinalement, pour absorber l'énergie du choc.

Le pare-chocs **2** avant comprend un obturateur **14**, cet obturateur **14** est monté avec les deux éléments **8**, **9** de structure. L'obturateur **14** est situé derrière la grille **5**, à une extrémité **15** latérale de celle-ci. Le rôle de l'obturateur **14** est de dévier le flux d'air entrant par l'ouverture **4**, pour le concentrer au niveau du radiateur **6** d'air de suralimentation, de sorte à améliorer son refroidissement.

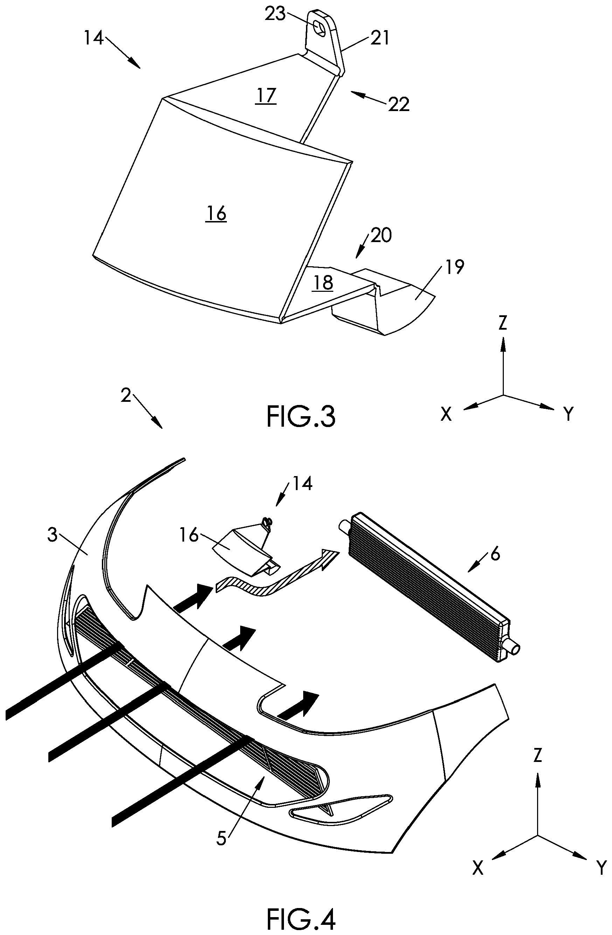

Tel qu'illustré sur la figure 3, l'obturateur **14** arbore une forme en U comprenant un panneau **16** duquel s'étendent à ses extrémités une patte **17** supérieure et une patte **18** inférieure.

Le panneau **16** épouse la forme de la grille **5**, pour se placer au plus près de celle-ci et bloquer l'arrivée d'air.

Les pattes **17**, **18** définissent la largeur de l'obturateur **14**, plus la largeur de l'obturateur **14** sera importante plus l'amortissement de la ou les jambes d'un piéton sera efficace en cas de collision avec le pare-chocs **2,** ainsi, les pattes **17**, **18** s'étendent avantageusement depuis le panneau **16** jusqu'aux éléments **8**, **9** de structure.

Comme on peut le voir sur la figure 4 où le flux d'air est représenté par des flèches noires, l'air traverse l'ouverture **4** et la grille **5**, et est dévié, à son impact sur le panneau **16** (comme l'indique la flèche hachurée), pour atteindre directement le radiateur **6** d'air de suralimentation.

La largeur du panneau **16** dépend de la largeur de l'organe mécanique à masquer. Par exemple, l'organe à masquer est un convoyeur d'air acheminant une partie du flux d'air à un radiateur d'air de suralimentation.

Dans le mode de réalisation représenté, l'obturateur **14** est mis en position par emboitement avec l'élément **9** de structure inférieur, l'obturateur **14** comprenant une languette **19** s'étendant depuis une extrémité **20** inférieure de la patte **18** inférieure, la languette **19** étant apte à s'insérer à l'intérieur du pied **12** de la poutre **11** inférieure, celui-ci étant creux.

La languette **19** présente une forme de came qui confère une facilité de montage à l'obturateur **14**, plus particulièrement de la patte **18** inférieure, cette forme de came permet également à l'obturateur **14** de se briser facilement en plusieurs parties en cas d'un choc piéton avec le pare-chocs **2**.

Dans le mode de réalisation représenté, l'obturateur **14** comprend un plat **21** s'étendant verticalement depuis une extrémité **22** supérieure de la patte **17** supérieure. Le plat **21** comprend un trou **23** permettant d'insérer un moyen de fixation, pour solidariser l'obturateur **14** à l'élément **8** de structure supérieur. Le moyen de fixation est par exemple un rivet **24**.

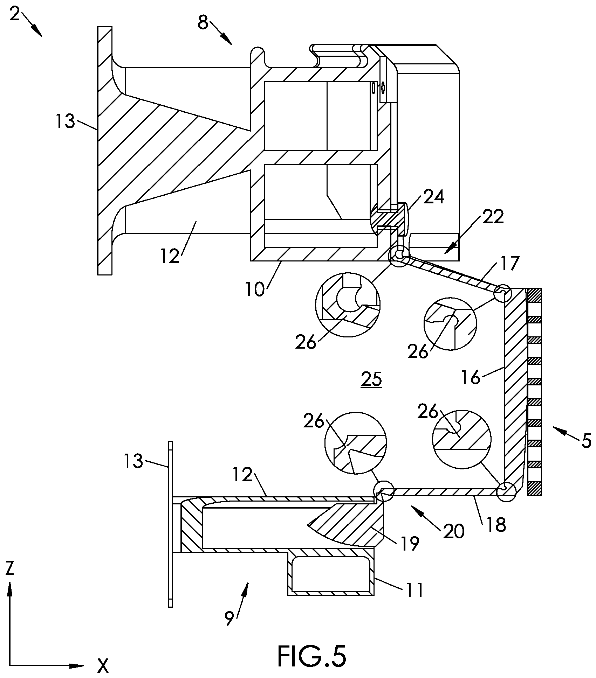

Tel qu'illustré sur la figure 5, la forme en U de l'obturateur **14** définit un espace **25** vide. Cet espace **25** permet d'évacuer les restes de l'obturateur **14**, lorsque celui-ci se brise.

En effet, l'obturateur **14** comprend quatre zones ou points **26** de rupture, localisés par des réductions d'épaisseur :
- à la jonction du plat **21** et de la patte **17** supérieure,
- à la jonction de la patte **17** supérieure et du panneau **16**,
- à la jonction du panneau **16** et de la patte **18** inférieure,
- et enfin à la jonction de la patte **18** inférieure et de la languette **19**.
Ces points **26** de rupture permettent, lorsqu'un choc se produit entre un piéton et le pare-chocs **2** avant, de briser l'obturateur **14** en plusieurs parties composées de la patte **17** supérieure, de la patte **18** inférieure et du panneau **16**, ces parties se retrouvent alors dans l'espace **25** et ne font pas obstacle à la ou les jambes d'un piéton, elles seront simplement poussées vers l'intérieur du véhicule **1**. Ainsi, l'obturateur **14** ne fera pas obstacle à la course de la jambe d'un piéton percutant le pare-chocs **2** avant.

Un obstacle trop robuste aurait pour conséquence de dégrader l'enfoncement de la jambe d'un piéton percutant le pare-chocs **2** avant, cet obstacle pourrait alors endommager la jambe de ce piéton.

L'obturateur **14** décrit-ci dessus présente de nombreux avantages :
- il permet d'améliorer la protection des jambes d'un piéton percutant le pare-chocs **2** avant du véhicule **1** automobile ;
- il permet de dévier et conduire un flux d'air au radiateur **6** d'air de suralimentation pour le refroidir efficacement ;
- il est compact ;
- il n'est pas directement intégré au pare-chocs **2** du véhicule **1** et n'entraine donc pas une diversité de pare-chocs en fonction de la présence ou non d'un obturateur, un tel obturateur peut être commun à un ensemble de véhicules utilisant une même plateforme et présentant la même structure.

## Revendications

1. Partie avant de véhicule (**1**) munie d'un pare-chocs (**2**) avant comprenant :
- une peau (**3**) extérieure, comportant une ouverture (**4**),
- un radiateur (**6**),
- un élément (**8**) de structure supérieur,
- un élément (**9**) de structure inférieur,
- un obturateur (**14**) comportant un panneau (**16**), monté entre le radiateur (**6**) et la peau (**3**) extérieure, l'obturateur (**14**) étant monté avec l'élément (**8**) de structure supérieur et l'élément (**9**) de structure inférieur, l'obturateur (**14**) étant apte à bloquer en partie l'ouverture (**4**), **caractérisé en ce que** l'obturateur (**14**) comprend une patte (**17**) supérieure et une patte (**18**) inférieure s'étendant respectivement depuis le panneau (**16**) jusqu'aux éléments (**8**, **9**) de structure, de sorte à définir un espace (**25**), la patte (17) supérieure comprenant à ses extrémités deux points (26) de rupture.

2. Partie avant de véhicule (**1**) selon la revendication 1, **caractérisé en ce que** la patte (**18**) inférieure comprend à ses extrémités deux points (**26**) de rupture.

3. Partie avant de véhicule (**1**) selon l'une quelconque des revendications précédentes, **caractérisé en ce que** l'obturateur (**14**) comprend une languette (**19**) s'étendant depuis la patte (**18**) inférieure et étant apte à s'insérer dans l'élément (**9**) de structure inférieur, la languette **19** présentant une forme de came.

4. Partie avant de véhicule (**1**) selon l'une quelconque des revendications précédentes, **caractérisé en ce que** l'obturateur (**14**) comprend un plat (**21**) s'étendant depuis la patte (**17**) supérieure, le plat (**21**) étant percé d'un trou (**23**) apte à recevoir un rivet (**24**), de sorte à maintenir en place l'obturateur (**14**) avec la poutre (**10**) supérieure.

5. Véhicule comprenant une partie avant selon l'une quelconque des revendications précédentes.

## Patentansprüche

1. Kraftfahrzeugvorderteil (1), der mit einem vorderen Stoßdämpfer (2) versehen ist, der Folgendes umfasst:
- eine Außenhaut (3), die eine Öffnung (4) umfasst,
- einen Kühler (6),
- ein oberes Strukturelement (8),
- ein unteres Strukturelement (9),
- einen Verschluss (14), der eine Platte (16) umfasst, die zwischen dem Kühler (6) und der Außenhaut (3) montiert ist, wobei der Verschluss (14) mit dem oberen Strukturelement (8) und dem unteren Strukturelement (9) montiert ist, wobei der Verschluss (14) geeignet ist, um die Öffnung (4) zum Teil zu blockieren,
**dadurch gekennzeichnet, dass** der Verschluss (14) eine obere Pratze (17) und eine untere Pratze (18) umfasst, die sich jeweils ausgehend von der Platte (16) bis zu den Strukturelementen (8, 9) derart erstrecken, dass ein Raum (25) definiert ist, wobei die obere Pratze (17) an ihren Enden zwei Bruchstellen (26) umfasst.

2. Fahrzeugvorderteil (1) nach Anspruch 1, **dadurch gekennzeichnet, dass** die untere Pratze (18) an ihren Enden zwei Bruchstellen (26) umfasst.

3. Fahrzeugvorderteil (1) nach einem der vorstehenden Ansprüche, **dadurch gekennzeichnet, dass** der Verschluss (14) eine Lasche (19) umfasst, die sich von der unteren Pratze (18) erstreckt und geeignet ist, um sich in das untere Strukturelement (9) zu fügen, wobei die Lasche (19) eine Nockenform aufweist.

4. Fahrzeugvorderteil (1) nach einem der vorstehenden Ansprüche, **dadurch gekennzeichnet, dass** der Verschluss (14) ein Flachteil (21) umfasst, das sich von der oberen Pratze (17) erstreckt, wobei das Flachteil (21) mit einer Bohrung (23) durchbohrt und geeignet ist, eine Niete (24) derart aufzunehmen, dass der Verschluss (14) mit dem oberen Träger (10) an Ort und Stelle gehalten wird.

5. Fahrzeug, das einen Vorderteil nach einem der vorstehenden Ansprüche umfasst.

## Claims

1. A front part of a vehicle (1) provided with a front bumper (2) including:
- an exterior skin (3), comprising an opening (4),
- a radiator (6),
- an upper structural element (8),
- a lower structural element (9),
- a shutter (14) comprising a panel (16), mounted between the radiator (6) and the exterior skin (3), the shutter (14) being mounted with the upper structural element (8) and the lower structural element (9), the shutter (14) being able to partly block the opening (4),
**characterized in that** the shutter (14) includes an upper tab (17) and a lower tab (18) extending respectively from the panel (16) to the structural elements (8, 9), so as to define a space (25), the upper tab (17) including at its ends two breaking points (26).

2. The front part of a vehicle (1) according to Claim 1, **characterized in that** the lower tab (18) includes at its ends two breaking points (26).

3. The front part of a vehicle (1) according to any one of the preceding claims, **characterized in that** the shutter (14) includes a tongue (19) extending from the lower tab (18) and being able to be inserted in the lower structural element (9), the tongue (19) having the shape of a cam.

4. The front part of a vehicle (1) according to any one of the preceding claims, **characterized in that** the shutter (14) includes a plate (21) extending from the upper tab (17), the plate (21) being pierced by a hole (23) able to be receive a rivet (24), so as to keep in place the shutter (14) with the upper beam (10).

5. A vehicle including a front part according to any one of the preceding claims.
